# EUROPÄISCHE PATENTSCHRIFT

(11) **EP 1 231 048 B1**
(45) Veröffentlichungstag und Bekanntmachung des Hinweises auf die Patenterteilung: **28.04.2004**
(21) Anmeldenummer: 01129901.3
(22) Anmeldetag: 15.12.2001
(51) Int. Cl.: B29D 23/00, B29C 63/38, H02K 5/128

(54) **Verfahren zur Herstellung eines Spaltrohres**
Process for the production of an air-gap sleeve
Procédé de production d'un tube d'entrefer

(30) Priorität: 09.02.2001 DE 10106043
(43) Veröffentlichungstag der Anmeldung: 14.08.2002
(73) Patentinhaber: Pierburg GmbH, 41460 Neuss (DE); WILO GmbH, D-44263 Dortmund (DE)
(72) Erfinder: Materne, Thomas, 59348 Lüdinghausen (DE); Lauschke, Uwe, Dr., 44359 Dortmund (DE)
(74) Vertreter: Ter Smitten, Hans

(56) Entgegenhaltungen:
- DE-A- 19 926 530

## Beschreibung

Die Erfindung betrifft ein Verfahren zur Herstellung eines Spaltrohres aus Kunststoff für eine Spaltrohrpumpe, insbesondere für Heizungs- oder Kühlwasserpumpe, vorzugsweise für den Automobilbereich.

Derartige aus Kunststoff hergestellte Spalttöpfe sind z. B. aus der DE 199 26 530 A 1 bekannt. Sie finden Verwendung in den wohl bekannten Spaltrohrpumpen und haben dort die Aufgabe eine dauerhafte Isolierung des vom Fördermedium durchspülten Naßraumes gegenüber dem Trockenraum darzustellen. In diesem ist der bestromte Stator angeordnet und dieser umschließt den magnetischen Rotor. Das dazwischen befindliche Spaltrohr soll möglichst dünn ausgeführt sein um den Spalt zwischen diesen Bauteilen gering zu halten. Dies ist erforderlich, um den elektrischen Wirkungsgrad der Pumpe bzw. des Antriebsmotors dieser Pumpe möglichst groß auszuführen. Da jedoch im Inneren des Rohres durch den vom Fördermedium aufgebauten Betriebsdruck das Spaltrohr entsprechend steif sein muß, ist der Verringerung der Wandstärke des Spaltrohres in Abhängigkeit von dem verwendeten Material eine Grenze gesetzt. Als geeignetes Material für dieses Spaltrohr hat sich ein Thermoplast z. B. PPS (Polyphenylensulfid) oder auch ein Duroplast herausgestellt. Die Materialien müssen chemikalienbeständig sein und auch erhöhten Betriebstemperaturen standhalten. Das Spaltrohr muß im Inneren eine harte Oberfläche aufweisen um ein Eindringen von abrasiven Stoffen zu verhindern. Ferner muß es eine gute Maßgenauigkeit im Hinblick auf Wandstärkentoleranzen und Rundheit des Spaltrohres aufweisen.

Aus diesen Anforderungen an das Spaltrohr ergeben sich Schwierigkeiten bei dessen Herstellung. Ein aus thermoplastischem Material durch Extrudieren hergestelltes Rohr muß noch getempert werden, damit aus dem amorphen-Gefüge ein kristallines entsteht. Bei aus Duroplasten z. B. gespritzten Rohren wird beim Tempern die Makromolekülstruktur homogenisiert. Bei diesem Temperaturbehandlungsvorgang des Tempems werden im Inneren des Rohres Spannungen frei und es verformt sich unzulässig, so daß der Ausschuß relativ hoch ist.

Ausgehend von der vorstehend beschriebenen Situation liegt der Erfindung die Aufgabe zugrunde, ein Verfahren zur Herstellung eines Spaltrohres zu schaffen, das die o. g. Nachteile vermeidet und die technischen Anforderungen, die an das Spaltrohr gestellt werden, erfüllt. Eine weitere Aufgabe der Erfindung ist die Schaffung eines hoch präzisen dünnwandigen Spaltrohres mit hoher Festigkeit.

Die Aufgabe der Erfindung wird bei einem Verfahren eingangs genannter Art durch die Merkmale des Hauptanspruchs gelöst. Vorteilhafte Ausgestaltungen sind in den weiteren Ansprüchen angegeben.

Die Erfindung offenbart ein Verfahren zur Herstellung eines Spaltrohres aus Kunststoff für eine Spaltrohrpumpe, insbesondere für eine Heizungs- oder Kühlwasserpumpe, vorzugsweise für den Automobilbereich, wobei
a) eine aus einem Kunststoff bestehendes dünnwandiges Rohr auf einem spreizbaren Dorn gespannt wird,
b) das Rohr mit einer versteifenden Schicht überzogen oder umwickelt wird,
c) vor dem Überzug bzw. bei oder nach der Umwicklung flüssiges Kunstharz auf das Rohr zur Schaffung einer Verbindung zwischen dem Rohr und der versteifenden Schicht aufgebracht wird,
d) nachfolgend dieser auf dem Dom gespannter Verbund für eine vorbestimmte Zeit beim vorbestimmten Temperaturgang ausgehärtet wird, wobei der Temperaturgang so gewählt ist, daß das thermoplastische Material des extrudierten Rohres in einem Tempervorgang ein kristallines Gefüge ausbildet,
e) der Dorn nach der Temperaturbehandlung aus dem Rohr entfernt wird.

Mit diesem Herstellungsvorgang ergibt sich ein Spaltrohr das in Hybridtechnik aufgebaut ist. Das extrudierte Rohr aus Thermoplast (z.B. PPS = Polyphenylensulfid) weist hohe Festigkeit und Steifigkeit auch bei hohen Temperaturen bis 140° Grad Celsius auf. Das Material nimmt nur in sehr geringem Maße Wasser auf und unterliegt somit keiner Geometrieveränderung durch Quellung, darüber hinaus ist es gut chemikalienbeständig auch über lange Betriebszeiten bei der Verwendung von Kühlmedien aus Wasser und Glykol. Bei der Verwendung eines Duroplastes sind noch höhere Betriebstemperaturen bis ca. 240° Grad Celsius möglich. Die versteifende Schicht des Verstärkungsmaterials besteht aus Fäden oder Garne oder einem bandförmigen Gewebe oder Faserverbünde (Rowings), die mit oder ohne Vorspannung ein- oder mehrlagig aufgebracht werden. Auch ist es denkbar, aus diesen Materialien z. B. Glas-, Kohle- oder Aramidfasern hergestellten Strumpf oder Schlauch über das aufgespannte extrudierte Rohr zu ziehen. Diese können natürlich auch aus Fäden oder Garne hergestellt sein. Darüber hinaus ist für die versteifende Schicht ein Material einsetzbar, das in der beschriebenen Form aufgebracht wird und sich unter Temperatureinfluß ähnlich wie eine Schrumpffolie zusammenzieht. Es wird also in Verbindung mit dem extrudierten Rohr, das natürlich in seiner Grundmasse mit Glasfasern verstärkt sein kann, durch die unter Vorspannung aufgebrachte verstärkende Schicht in Verbindung mit dem aufgebrachten flüssigen Kunststoff wie z.B. Epoxidharz, Aminharz oder Anhydridharz ein Spaltrohr geschaffen, das auch bei erhöhtem Innendruck formstabil bleibt und somit geringstmögliche Spaltmaße im Elektromotor ermöglicht. Der flüssige Kunststoff wird vor dem Überzug mit dem Schlauch bzw. bei oder nach dem Umwickeln mit Fäden, Bänder oder Rowings oder dem Überzug des Strumpfes aufgebracht. Die Wandstärke des im Verbund hergestellten Spaltrohres ist z.B. bei einem unverstärkten PPS 0,4 bis 0,5 mm für das extrudierte Rohr und im Verbund mit der versteifenden Schicht ca. 0,8 mm insgesamt. Zur Temperung wird bei der Verwendung von Epoxidharz eine Wärmebehandlung bei 150° Grad für ca. 30 Minuten vorgenommen.

Nach Herstellung des Rohlings werden von dem Rohr Abschnitte in der für die Spaltrohrpumpe benötigten Länge abgetrennt.

Sollte es sich im Herstellungsverfahren als notwendig erweisen, kann als zusätzlicher Arbeitsgang nach dem Aufbringen des Kunstharzes der Außenmantel des Rohres mechanisch durch Abziehen mit einer Formhülse geglättet werden. Unter Umständen kann es darüber hinaus oder statt dessen zweckmäßig sein, den Außenmantel des Rohres nach der Wärmebehandlung durch spanende Bearbeitung z.B. in einem Schleifvorgang zu glätten.

## Patentansprüche

1. Verfahren zur Herstellung eines Spaltrohres aus Kunststoff für eine Spaltrohrpumpe, insbesondere für eine Heizungs- oder Kühlwasserpumpe, vorzugsweise für den Automobilbereich, **dadurch gekennzeichnet, daß**
a) ein aus einem Kunststoff bestehendes dünnwandiges Rohr auf einen spreizbaren Dorn gespannt wird,
b) das Rohr mit einer versteifenden Schicht überzogen oder umwickelt wird,
c) vor dem Überzug bzw. bei oder nach der Umwicklung flüssiger Kunstharz auf das Rohr zur Schaffung einer Verbindung zwischen dem Rohr und der versteifenden Schicht aufgebracht wird,
d) nachfolgend dieser auf dem Dorn gespannte Verbund für eine vorbestimmte Zeit bei einem vorbestimmten Temperaturgang ausgehärtet wird, wobei der Temperaturgang so gewählt ist, daß das thermoplastische Material des extrudierten Rohres in einem Tempervorgang ein kristallines Gefüge ausbildet,
e) der Dorn nach der Temperaturbehandlung aus dem Rohr entfernt wird.

2. Verfahren nach Anspruch 1, **dadurch gekennzeichnet, daß** das dünnwandige Rohr aus einem thermoplastischen Kunststoff hergestellt ist.

3. Verfahren nach Anspruch 2, **dadurch gekennzeichnet, daß** das dünnwandige Rohr aus einem thermoplastischen Kunststoff extrudiert ist.

4. Verfahren nach Anspruch 1, **dadurch gekennzeichnet, daß** das dünnwandige Rohr aus einem duroplastischen Kunststoff hergestellt ist.

5. Verfahren nach Anspruch 4, **dadurch gekennzeichnet, daß** das dünnwandige Rohr aus einem duroplastischen Kunststoff gespritzt ist.

6. Verfahren nach mindestens einem der vorstehenden Ansprüche, **dadurch gekennzeichnet, daß** die versteifende Schicht durch Umwicklung mit Fäden erzeugt wird.

7. Verfahren nach mindestens einem der vorstehenden Ansprüche, **dadurch gekennzeichnet, daß** eine versteifende Schicht durch Umwicklung mit einem Band erzeugt wird.

8. Verfahren nach mindestens einem der vorstehenden Ansprüche, **dadurch gekennzeichnet, daß** die versteifende Schicht durch Umwicklung mit Faserverbünden erzeugt wird.

9. Verfahren nach mindestens einem der vorstehenden Ansprüche, **dadurch gekennzeichnet, daß** die versteifende Schicht durch Überzug mit einem Strumpf erzeugt wird.

10. Verfahren nach mindestens einem der vorstehenden Ansprüche, **dadurch gekennzeichnet, daß** die versteifende Schicht durch Überzug mit einem Schlauch erzeugt wird.

11. Verfahren nach mindestens einem der vorstehenden Ansprüche, **dadurch gekennzeichnet, daß** die Aufbringung der versteifenden Schicht ohne Vorspannung erfolgt.

12. Verfahren nach mindestens einem der Ansprüche 1 bis 10, **dadurch gekennzeichnet, daß** die Aufbringung der versteifenden Schicht unter Vorspannung erfolgt.

13. Verfahren nach mindestens einem der Ansprüche 1 bis 10, **dadurch gekennzeichnet, daß** die Temperaturbehandlung eine Vorspannung in der versteifenden Schicht erzeugt.

14. Verfahren nach mindestens einem der vorstehenden Ansprüche, **dadurch gekennzeichnet, daß** von dem Rohr Abschnitte in der für die Spaltrohrpumpe benötigten Länge abgetrennt werden.

15. Verfahren nach mindestens einem der vorstehenden Ansprüche, **dadurch gekennzeichnet, daß** der Außenmantel des Rohres nach dem Aufbringen des Kunstharzes mechanisch durch Abziehen mit einer Formhülse geglättet wird.

16. Verfahren nach mindestens einem der vorstehenden Ansprüche, **dadurch gekennzeichnet, daß** der Außenmantel des Rohres nach der Wärmebehandlung durch spanende Bearbeitung geglättet wird.

17. Spaltrohr aus Kunststoff für eine Spaltrohrpumpe, insbesondere für eine Heizungs- oder Kühlwasserpumpe, vorzugsweise für den Automobilbereich, **dadurch gekennzeichnet, daß** das Spaltrohr mindestens zweilagig ausgebildet ist.

## Claims

1. Process for producing from plastic a spacer can for a canned motor pump, particularly for a heating-water or cooling-water pump, preferably for the automobile sector, **characterized in that**
a) a thin-walled can, composed of plastic, is clamped onto an expandable arbor,
b) the can is covered or wrapped with a stiffening layer,
c) liquid synthetic resin is applied to the can, before covering or during or following the wrapping, for the purpose of creating a bond between the can and the stiffening layer,
d) this composite, clamped on the arbor, is subsequently cured for a predetermined period of time at a predetermined temperature cycle, the temperature cycle being selected such that the thermoplastic material of the extruded can forms a crystalline structure in a tempering operation,
e) the arbor is removed from the can following the thermal treatment.

2. Process according to claim 1, **characterized in that** the thin-walled can is produced from a thermoplastic material.

3. Process according to claim 2, **characterized in that** the thin-walled can is extruded from a thermoplastic material.

4. Process according to claim 1, **characterized in that** the thin-walled can is produced from a thermosetting plastic.

5. Process according to claim 4, **characterized in that** the thin-walled can is injection-moulded from a thermosetting plastic.

6. Process according to at least one of the preceding claims, **characterized in that** the stiffening layer is produced by wrapping with threads.

7. Process according to at least one of the preceding claims, **characterized in that** a stiffening layer is produced by wrapping with a tape.

8. Process according to at least one of the preceding claims, **characterized in that** the stiffening layer is produced by wrapping with fibrous composites.

9. Process according to at least one of the preceding claims, **characterized in that** the stiffening layer is produced by covering with a sock.

10. Process according to at least one of the preceding claims, **characterized in that** the stiffening layer is produced by covering with a tube.

11. Process according to at least one of the preceding claims, **characterized in that** the application of the stiffening layer is effected without prestress.

12. Process according to at least one of claims 1 to 10, **characterized in that** the application of the stiffening layer is effected with prestress.

13. Process according to at least one of claims 1 to 10, **characterized in that** the thermal treatment produces a prestress in the stiffening layer.

14. Process according to at least one of the preceding claims, **characterized in that** portions are separated from the can, in the length required for the canned motor pump.

15. Process according to at least one of the preceding claims, **characterized in that,** following the application of the synthetic resin, the external cylindrical surface of the can is mechanically smoothed by means of a forming sleeve.

16. Process according to at least one of the preceding claims, **characterized in that** the external cylindrical surface of the can is smoothed, following the heat treatment, by machining.

17. Spacer can, composed of plastic, for a canned motor pump, particularly for a heating-water or cooling-water pump, preferably for the automobile sector, **characterized in that** the spacer can is made of at least two layers.

## Revendications

1. Procédé de production d'une gaine en matière plastique pour une pompe à gaine, en particulier pour une pompe à eau de chauffage ou de refroidissement, de préférence pour le domaine de l'automobile, **caractérisé en ce que**
a) un tube à paroi mince, constitué d'une matière plastique, est bridé sur un mandrin extensible,
b) le tube est recouvert ou enroulé avec une couche de rigidification,
c) avant le recouvrement ou pendant ou après l'enroulement, de la résine synthétique est appliquée sur le tube pour créer une liaison entre le tube et la couche de rigidification,
d) ensuite, ce composite bridé sur le mandrin est durci pendant une période prédéfinie selon une courbe de températures prédéfinie, la courbe de températures étant choisie de telle manière que, dans une opération de recuit, le matériau thermoplastique du tube extrudé forme une structure cristalline,
e) le mandrin est retiré du tube après le traitement thermique.

2. Procédé selon la revendication 1, **caractérisé en ce que** le tube à paroi mince est réalisé en une matière thermoplastique.

3. Procédé selon la revendication 2, **caractérisé en ce que** le tube à paroi mince est extrudé en une matière thermoplastique.

4. Procédé selon la revendication 1, **caractérisé en ce que** le tube à paroi mince est réalisé en une matière thermodurcissable.

5. Procédé selon la revendication 4, **caractérisé en ce que** le tube à paroi mince est injecté en une matière thermodurcissable.

6. Procédé selon au moins l'une des revendications précédentes, **caractérisé en ce que** la couche dé rigidification est réalisée par enroulement avec des fils.

7. Procédé selon au moins l'une des revendications précédentes, **caractérisé en ce que** la couche de rigidification est réalisée par enroulement avec une bande.

8. Procédé selon au moins l'une des revendications précédentes, **caractérisé en ce que** la couche de rigidification est réalisée par enroulement avec des composites de fibres.

9. Procédé selon au moins l'une des revendications précédentes, **caractérisé en ce que** la couche de rigidification est réalisée par recouvrement avec un manchon.

10. Procédé selon au moins l'une des revendications précédentes, **caractérisé en ce que** le la couche de rigidification est réalisée par revêtement avec un tuyau.

11. Procédé selon au moins l'une des revendications précédentes, **caractérisé en ce que** la mise en place de la couche de rigidification s'opère sans précontrainte.

12. Procédé selon au moins l'une des revendications 1 à 10, **caractérisé en ce que** la mise en place de la couche de rigidification s'opère sous précontrainte.

13. Procédé selon au moins l'une des revendications 1 à 10, **caractérisé en ce que** le traitement thermique génère une précontrainte dans la couche de rigidification.

14. Procédé selon au moins l'une des revendications précédentes, **caractérisé en ce que** des sections à la longueur requise pour la pompe à gaine sont séparées du tube.

15. Procédé selon au moins l'une des revendications précédentes, **caractérisé en ce qu'**après l'application de la résine synthétique, l'enveloppe extérieure du tube est lissée mécaniquement par rectification à l'aide d'une douille de façonnage.

16. Procédé selon au moins l'une des revendications précédentes, **caractérisé en ce qu'**après le traitement thermique, l'enveloppe extérieure du tube est lissée par usinage avec enlèvement de matière.

17. Gaine en matière plastique pour une pompe à une gaine, en particulier pour une pompe à eau de chauffage ou de refroidissement, de préférence pour le domaine de l'automobile, **caractérisée en ce que** la gaine est réalisée en au moins deux couches.
